# EUROPEAN PATENT APPLICATION

(11) **EP 4 723 620 A1**
(43) Date of publication of application: **08.04.2026**
(21) Application number: 24204683.7
(22) Date of filing: 04.10.2024
(51) Int. Cl.: H04N 17/00, G01R 1/067, G01R 1/073, G01R 31/00, G02B 7/00, G02B 7/02, G02B 27/62, H04N 23/54, H04N 23/55

(54) **A CIRCUIT BOARD FOR AN OPTICAL DEVICE**

(71) Applicant: Aptiv Technologies AG, 8200 Schaffhausen (CH)
(72) Inventor: HEBDA, Pawel, krakow (PL); ANTOS, Przemyslaw, Skawina (PL); POMYKACZ, Emilia, Krakow (PL); HOJNCA, Daniel, Krakow (PL); PIETRAS, Marcin, Krakow (PL)
(74) Representative: Lewis Silkin LLP

(57) **Abstract**

A circuit board (10) for an optical device (100). The circuit board (10) comprising a plurality of test points (16) arranged on one side of the circuit board, and an imager (12) mounted on the other side of the circuit board. The plurality of test points (16) are uniformly arranged on the circuit board within a shadow area (22) defined by the imager (12).

## Description

### Introduction

The present disclosure relates to a circuit board for an optical device, an optical device comprising said circuit board, and a method of aligning said optical device.

### Background

Cameras and other optical devices are important sensors in automotive applications, particularly with the increasing prevalence of autonomous driving and safety assistance systems. As these systems become more advanced, they have driven the use of higher resolution cameras. However, as a digital camera's resolution increases, it becomes more sensitive to optical misalignment caused by, for example, tolerances during the manufacturing process, as well as strain and deformations arising during alignment and once the camera's imager is fixed in place.

In this respect, a conventional camera device or optical device includes an imager soldered to a printed circuit board (PCB). A lens holder, or housing, is then mechanically secured to the PCB over the imager. One or more lenses within the lens holder will then be actively aligned to the imager to align the focal plane of the one or more lenses with the sensitivity plane of the imager's sensor. This allows a focused image output to be provided. Once in its aligned position, the one or more lens are then secured by curing an adhesive at a mounting interface between the lens and the lens holder.

During the above active alignment process, positional inaccuracy between the one or more lenses and the imager can still occur. For example, although the lens active alignment step can be used to correct for tilting of the imager relative to the lens elements, it does not address, for example, potential displacement of the imager relative to the lens holder or housing. Such positional inaccuracies may arise, for instance, because of how electrical connections are connected to the optical device is secured during the active alignment process. For example, to align the one or more lenses to the imager, the optical device is secured to a testing pallet, which comprises a plurality of test pins. These test pins are electrically connected to respective test points on the PCB to provide power to the imager and to receive an output from the imager that is used to determine if the one or more lenses are correctly aligned.

Typically, the test pins are pogo pins, or springloaded pins, that apply a constant normal force against the back of the test points, counteracting any unwanted movement which might otherwise cause an intermittent connection. However, as the test pins exert a force on the PCB, this results in the displacement, or flexing, of the PCB and the imager. In conventional circuit boards the test points are located close to electrical components/connections on the PCB, typically remote from the imager. As the location of the test points are defined by the location of the electrical components/connections, the test points are arranged in non-uniform positions on the circuit board that do not consider possible deflection of the PCB from the test pins. As such, once the test pins have been disconnected or removed, the PCB returns to its original, unflexed state, which results in the lens and the imager being incorrectly aligned and results in an out of focus image projected onto the imager.

In view of the above, there is a need for an improved optical device and a method of aligning an optical device taking consideration of the displacement of the PCB and imager.

### Summary

The present disclosure concerns a circuit board for an optical device. Particularly, the invention seeks to circuit board with a plurality of test points that are uniformly distributed on the PCB, such that displacement of the imager of the PCB can be taken into consideration during the active alignment process. In addition, the present disclosure concerns an optical device comprising said circuit board and a method of aligning said optical device.

According to a first aspect of the present invention, there is provided a circuit board for an optical device as specified in claim 1. The circuit board comprising: a plurality of test points arranged on the circuit board; an imager mounted on the circuit board, wherein the plurality of test points are uniformly arranged on the circuit board within an area defined by the imager.

In this way, test points are uniformly distributed directly behind the imager on the circuit board. This results in a uniform displacement of the circuit board when the test pins are electrically connected to the test points during an active alignment process, thereby allowing the displacement to be taken into consideration and the position of the imager can be pre-compensated.

In embodiments, the plurality of test points are arranged axisymmetrically on the circuit board about a first axis with respect to a center of imager. In embodiments, the plurality of test points are arranged axisymmetrically on the circuit board about the first axis and a second axis with respect to the center of the imager. In this way, test points are distributed symmetrically behind the imager, which results in a uniform and symmetric force being applied to the circuit board during the active alignment process.

In embodiments, the second axis is perpendicular to the first axis.

In embodiments, at least one of the test points is arranged on the circuit board along the first axis. In embodiments, at least one of the test points is arranged on the circuit board along the first axis or the second axis. In this way, when the circuit board is connected to a testing pallet during the active alignment process, force exerted from one of the test pins is along an axis of the imager and, thus, allows for easier calculation of the displacement of the circuit board.

In embodiments, at least one of the test points is arranged on the circuit board at the center of the imager. In this way, when the circuit board is connected to a testing pallet during the active alignment process, force exerted from one of the test pins is directly in the center of the imager and, thus, allows for easier calculation of the displacement of the circuit board.

According to a second aspect of the present invention, there is provided an optical device according to claim 8. The optical device comprising: a circuit board according to the first aspect; a housing secured to the circuit board, the housing comprising an opening; and a lens secured to the housing at the opening, wherein the opening forms an optical path between the lens and an imager mounted on the circuit board, such than an image is projected through the lens and onto the imager. In this way, an optical device is provided which allows for improved alignment of the imager during the active alignment process. That is, the position of the test points on the circuit board produces uniform displacement of the circuit board that can be taken into consideration during alignment of the imager. This thereby results in more accurate alignment of the imager in the optical device.

According to a third aspect of the present invention, there is provided a method of aligning an optical device according to claim 9. The method comprising: providing an optical device (i.e. according to the second aspect), the optical device comprising an imager mounted on a circuit board, wherein the imager has an active region; securing the optical device to a testing pallet, the testing pallet comprising a plurality of testing pins; electrically connecting the testing pins to a plurality of test points arranged on a circuit board of the optical device; and adjusting the position of the circuit board to align the active region with an image projected through a lens of the optical device.

In embodiments, the method further comprises applying a compensation calculation to determine a deflection of the circuit board, wherein the position of the circuit board is adjusted according to the compensation calculation. In this way, the adjustment of the circuit board takes into consideration the displacement of the circuit board and, thus, the position of the circuit board can be pre-compensation during the adjustment of the circuit board.

### Brief Description of Drawings

Illustrative embodiments will now be described with reference to the accompanying drawings in which:
Figure 1 illustrates a bottom view of a circuit board for an optical device; and
Figure 2 illustrates a side view of an optical device incorporating the circuit board shown in Figure 1.

### Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for structural features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction. Indeed, in the present case a term such as "horizontal" axis or "vertical" axis can be affected by the orientation imposed on the housing structure. Therefore, all directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

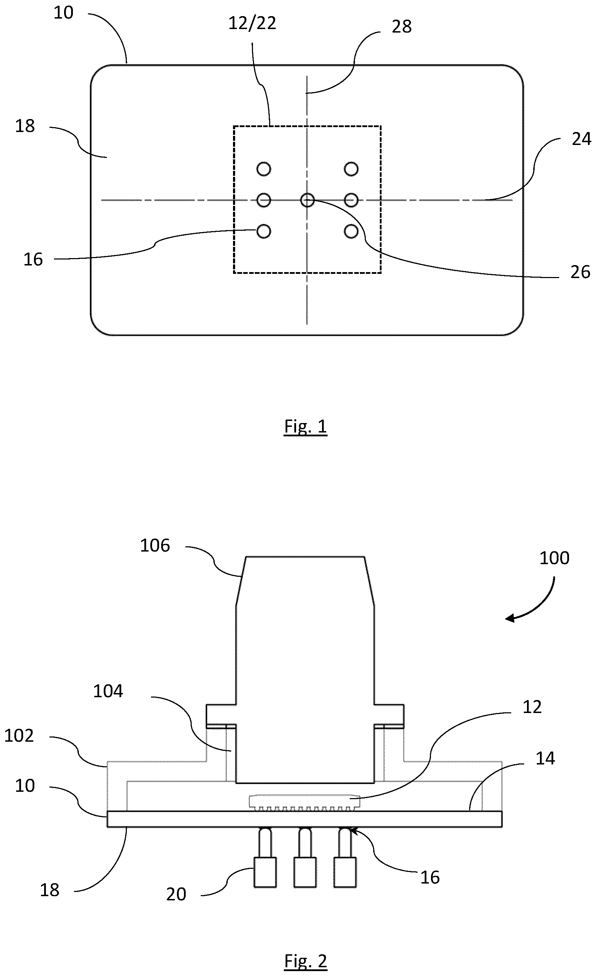

Figure 1 shows an underneath view of a printed circuit board, PCB 10, or circuit board, for an optical device 100 according to an embodiment of the present invention. The circuit board 10 comprises an imager 12 mounted on and secured to a top surface 14 (see Figure 2) of the circuit board 10. While Figure 1 shows the imager 12 mounted substantially in the centre of the circuit board, it is to be appreciated that the imager 12 may be mounted on any suitable region on the top surface 14 of the circuit board 10.

The circuit board 10 further comprises a plurality of test points 16 arranged on a bottom surface 18 of the circuit board 10 visible in Figure 1. The test points 16 are located on an exterior layer of the board, e.g., the bottom surface 18, such that test pins 20 as seen in Figure 2, or test probes, can make contact with the test points 16 during an active alignment process. The test points 16 on the circuit board 10 are exposed copper pads that can be used to check if the circuit board 10 is functioning to specification. In addition, the test points 12 enable the image projected onto the imager 12 to be output onto a computer (not shown), or any other suitable means for displaying the image received from the imager 12.

The imager 12 mounted on the circuit board 10 defines an area 22, or perimeter/outline, within which the plurality of test points 16 are arranged. That is, the plurality of test points 16 are arranged on the circuit board 10 directly underneath and within the area 22 of the imager 12 mounted on the circuit board 10, as shown in Figure 1. Preferably, the plurality of test points 16 are uniformly arranged within the area 22, which will be explained in more detail below. For the avoidance of doubt, there may be multiple contact points for testing on the bottom surface 18, but all test points associated with the active alignment process should fall within the area 22.

In one embodiment, the plurality of test points 16 are arranged axisymmetrically on the circuit board 10 about a first axis 24 with respect to a center 26 of the imager 12. That is, the first axis 24 passes through the center 26 of the imager 12 and is equivalent to a line of symmetry. As such, the plurality of test points 16 are symmetrically arranged within the area 22 about the first axis.

In the illustrated embodiment, the plurality of test points 16 are arranged axisymmetrically on the circuit board 10 about the first axis 24 and, in addition, a second axis 28 with respect to the center 26 of the imager 12. Similarly to the first axis 24, the second axis 28 also passes through the center 26 of the imager 26 and is also equivalent to a line of symmetry. Accordingly, the plurality of test points 16 are symmetrically arranged within the area 22 about the first axis 24 and the second axis 28. That is, the plurality of test points 16 are arranged on the circuit board 10 such that they have two lines of symmetry. In embodiments, the second axis 28 is perpendicular to the first axis 24.

In one embodiment, at least one of the test points 16 is arranged on the circuit board 10 substantially in line and along the first axis 24 or the second axis 28. In a further embodiment, at least one of the test points 16 is arranged on the circuit board 10 at the center 26 of the imager 12.

Figure 2 shows an assembled optical device 100 according to an embodiment of the present invention. The optical device 100 comprises the circuit board 10 described above. In addition, the optical device further comprises a housing 102 configured to be secured to the circuit board 10 by adhesive, screws, or any other suitable means. The housing 102 comprises an opening 104 against which a lens 106 can be mounted and secured to. The lens 106 may be secured to the opening via a screwthread, adhesive, or any other suitable means. The opening 104 forms an optical path between the lens 106 and the imager 12, such that an image can be projected through the lens 106 and onto the imager 12. The imager 12 having an active region onto which the image is projected through the lens 106.

During an active alignment process, the optical device 100 is placed onto a testing pallet/platform/rig (not shown). The testing pallet having an opening to receive the optical device 100 and includes a plurality of test pins 20 configured to be electrically connected to the plurality of test points 16 arranged on the bottom surface 18 of the circuit board 10. Preferably, the test pins 20 are pogo pins (i.e. spring biased). The test pins 20 provide power to the imager 12 and enable an image to be output from the imager 12, such that the imager 12 can be correctly aligned with the lens 106.

Once the optical device 100 is electrically connected to the test pins 20 of the testing pallet, the imager 12 and/or optical elements (not shown) within the lens 106 are adjusted such that the projected image through the lens 106 is projected onto the active region on the imager 12. As the test points 16 are uniformly located beneath the imager 12, the test pins 20 exert a pre-defined force onto the circuit board 10. The pre-defined force displaces the circuit board 10 and the imager 12 mounted on the circuit board 10. Advantageously, as the force is known, displacement of the circuit board 10 and the imager 12 can be calculated and factored in during the active alignment process. The displacement can be calculated using Finite Element Analysis (FEA) that takes into consideration, for example, the circuit board 10 supports, the size and/or stiffness of the circuit board 10, the location of the test points 16, and the forces exerted by the test points 16. Alternatively, or in combination, the displacement can be calculated from manually measuring the displacement of the circuit board 10, which can be used to verify the FEA results. Accordingly, during the adjustment of the imager 12 and the optical elements within the lens 106, the displacement of the imager 12 can be taken into consideration during the active alignment process, thereby enabling pre-compensation of the position of the imager 12 and/or the optical elements within the lens 106 during the adjustment of the imager 12 and the optical elements within the lens 106 to ensure correct alignment when the test pins 20 are disconnected from the circuit board 10 and no longer exert a force onto the circuit board 10. In one embodiment, the test points 16 are not in use and do not form an electrical connection once the optical device 100 is installed within a vehicle. For example, the circuit board 10 may be connected to the vehicle with force-free connector, such as, for example, a flex tape connector or a floating movement connector (XYZ floating connector) that decouples any external forces from the circuit board 10. This enables the imager 12 and/or lens 106 to be correctly aligned after the active alignment process.

The above circuit board for an optical device and the optical device comprising said circuit board enables accurate alignment of the imager relative to the lens by taking into consideration the forces exerted onto the circuit board during the active alignment process. Conventional circuit boards place the test pins at corners, or locations remote from the imager, to reduce the deflection of the circuit board and, thus, misalignment of the imager. As such, contrary to know arrangements, while the test pins are located behind the imager where an exerted force from the test pins results in the maximum displacement, the circuit board of the present invention results in a uniform displacement of the circuit board due to the arrangement of the test points. Accordingly, the displacement of the circuit board can be taken into consideration when aligning the imager and the position of the imager can be pre-compensated during the active alignment process.

By way of summary, a circuit board for an optical device is described herein. The circuit board comprises a plurality of test points arranged on one side of the circuit board, and an imager mounted on the other side of the circuit board. The plurality of test points are uniformly arranged on the circuit board within a shadow area defined by the imager.

## Claims

1. A circuit board for an optical device, comprising:
an imager mounted on a first side of the circuit board;
a plurality of test points arranged on a second side of the circuit board opposite the first side;
wherein the plurality of test points are uniformly arranged on the circuit board within a shadow area defined by the imager and in electrical communication therewith.

2. The circuit board according to claim 1, wherein the plurality of test points are arranged axisymmetrically on the circuit board about a first axis with respect to a center of the imager.

3. The circuit board according to claim 2, wherein the plurality of test points are arranged axisymmetrically on the circuit board about the first axis and a second axis with respect to the center of the imager.

4. The circuit board according to claim 3, wherein the second axis is perpendicular to the first axis.

5. The circuit board according to claim 2, wherein at least one of the test points is arranged on the circuit board along the first axis.

6. The circuit board according to claim 3, wherein at least one of the test points is arranged on the circuit board along the first axis or the second axis.

7. The circuit board according to any preceding claim, wherein at least one of the test points is arranged on the circuit board at the center of the shadow area.

8. An optical device comprising:
a circuit board according to any one of claims 1 to 7;
a housing secured to the circuit board, the housing comprising an opening; and
a lens secured to the housing at the opening,
wherein the opening forms an optical path between the lens and an imager mounted on the circuit board, such than an image is projected through the lens and onto the imager.

9. A method of aligning an optical device, the method comprising:
providing an optical device according to claim 8, the optical device comprising an imager mounted on a circuit board, wherein the imager has an active region;
securing the optical device to a testing pallet, the testing pallet comprising a plurality of test pins;
electrically connecting the test pins to the plurality of test points arranged on the circuit board of the optical device; and
adjusting the position of the circuit board to align the active region with an image projected through a lens of the optical device.

10. The method according to claim 9, the method further comprising:
applying a compensation calculation to determine a deflection of the circuit board, wherein the position of the circuit board is adjusted according to the compensation calculation.
